(19) Europäisches Patentamt
European Patent Office
Office européen des brevets

(11) Veröffentlichungsnummer : **0 070 445**
**B1**

# (12) EUROPÄISCHE PATENTSCHRIFT

(45) Veröffentlichungstag der Patentschrift : **05.06.85**

(51) Int. Cl.⁴ : **C 09 B 23/14**

(21) Anmeldenummer : **82105971.4**

(22) Anmeldetag : **05.07.82**

## (54) Verfahren zur Herstellung von Styrylfarbstoffen.

(30) Priorität : **16.07.81 DE 3128159**

(43) Veröffentlichungstag der Anmeldung : **26.01.83 Patentblatt 83/04**

(45) Bekanntmachung des Hinweises auf die Patenterteilung : **05.06.85 Patentblatt 85/23**

(84) Benannte Vertragsstaaten : **CH DE GB LI**

(56) Entgegenhaltungen : **US-A- 2 583 551**

(73) Patentinhaber : **BAYER AG**
**Konzernverwaltung RP Patentabteilung**
**D-5090 Leverkusen 1 Bayerwerk (DE)**

(72) Erfinder : **Hugl, Herbert, Dr.**
**Gemarkenweg 9**
**D-5060 Bergisch Gladbach 2 (DE)**
Erfinder : **Wolfrum, Gerhard, Dr.**
**Domblick 17**
**D-5090 Leverkusen 3 (DE)**
Erfinder : **Lehment, Klaus-Friedrich, Dr.**
**Theodor-Storm-Weg 6**
**D-5068 Odenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 070 445 B1

**Beschreibung**

Die Erfindung betrifft ein Verfahren zur Herstellung von Styrylfarbstoffen der Formel

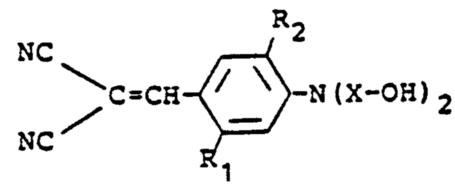

(I)

in der

$R_1$, $R_2$ Wasserstoff, Alkyl, Alkoxy oder Halogen und

X einen Alkylenrest bezeichnen.

Farbstoffe der Formel (I) sind bekannt, beispielsweise aus den US-Patentschriften 2 206 108, 2 583 551 und 2 798 090. Sie eignen sich zum Färben von Polyester-, Zellulosealkylester-, Polyamid-, Polyacrylnitrilfasern nach verschiedenen Färbe- und Druckverfahren. Ganz besonders wertvoll sind die Farbstoffe der Formel (I) zum Einfärben von Polyurethan-Kunststoffen gemäß der US-Patentschrift 4 132 840.

Bisher ist nur das in den obengenannten US-Patentschriften beschriebene Verfahren zur Herstellung von Farbstoffen der Formel (I) bekannt. Danach werden Bis-(2-hydroxyethyl)-aniline mit Formaldehyd und 3-Nitro-benzolsulfonsäure in Gegenwart großer Mengen an elementarem Eisen und konzentrierter Mineralsäure zu Anilinen der Formel A umgesetzt, z. B.

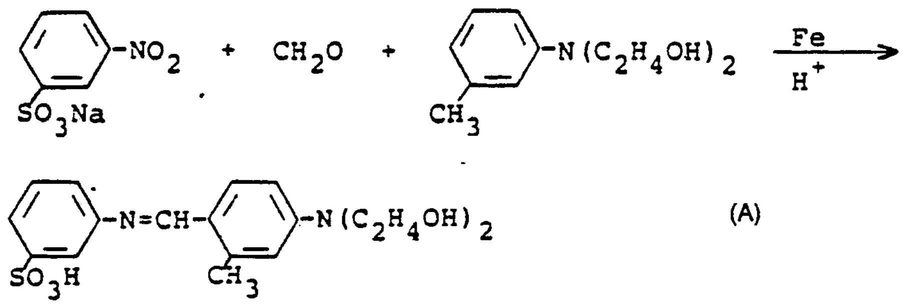


(A)

Die Verbindung der Formel (A) wird anschließend durch Erwärmen mit Malonsäuredinitril in den Farbstoff der Formel (I) mit $R_1 = CH_3$, $R_2 = H$ und $X = CH_2CH_2$— überführt.

Die Ausbeute ist niedrig und hängt stark von der Qualität der verwendeten Eisenspäne ab. Insbesondere bei Verwendung der Farbstoffe (I) zum Einfärben von Polyurethankunststoffen stören die stets anhaftenden Eisensalze, so daß aufwendige Reinigungsoperationen, z. B. Umkristallisieren aus organischem Lösungsmittel, notwendig sind.

Eine Variation dieses Verfahrens sowie die Diskussion anderer Synthesemöglichkeiten ist im Journal of the Society of Dyers and Colorists, Heft 4 (1977) auf S. 126, 127, 128 beschrieben. Dabei wird statt mit Eisen mit Zinkstaub reduziert. Auch in diesem Fall ist die Ausbeute gering und der Farbstoff ist mit Zinksalzen verunreinigt.

Das erfindungsgemäße Verfahren zur Herstellung der Farbstoffe der Formel (I) ist dadurch charakterisiert, daß man Verbindungen der Formel

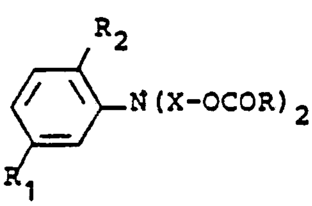

(III)

in der

$R_1$, $R_2$ Wasserstoff, Alkyl, Alkoxy oder Halogen

R Alkyl oder Aryl und

X Alkylen bezeichnen,

nach der Vilsmeier-Reaktion in Aldehyde der Formel

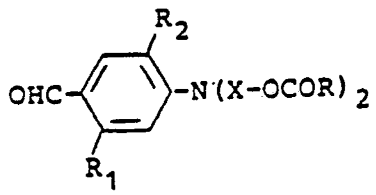

(IV)

in der

R, $R_1$, $R_2$ und X die zu Formel (III) angegebene Bedeutung haben,

überführt und man die Aldehyde mit Malonsäuredinitril zu Verbindungen der Formel

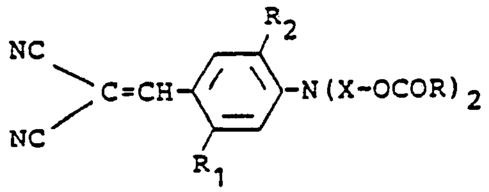

(II)

umsetzt, die mit Mineralsäure zu Verbindungen der Formel

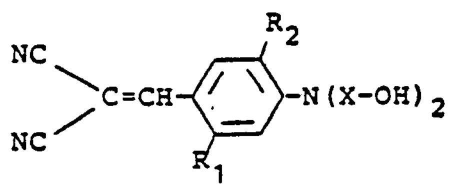

(I)

hydrolysiert werden, die man isoliert.

Die Verseifung wird vorzugsweise im Temperaturbereich zwischen 55 und 80 °C, beispielsweise in einem Gemisch aus Wasser und einem organischen Lösungsmittel oder in einem organischen Lösungsmittel ausgeführt. Als organische Lösungsmittel eignen sich vorzugsweise — aber keinesfalls ausschließlich — niedrige Alkohole wie Methanol oder Ethanol. Geeignete Säuren sind beispielsweise Salzsäure oder Schwefelsäure. Um eine quantitative Verseifung zu sichern, kann beispielsweise beim Arbeiten in Methanol gegen Ende der Reaktion Methylacetat abdestilliert werden. Die Isolierung der Farbstoffe der Formel (I) kann beispielsweise durch Verdünnen der Reaktionslösung mit Wasser oder durch Abdestillieren des Lösungsmittels erfolgen. Durch die Säurebehandlung wird das Farbstoffmolekül nicht in anderer unerwünschter Weise verändert.

Das erfindungsgemäße Verfahren hat gegenüber den bisher bekannten Herstellverfahren für Farbstoffe der Formel (I) den Vorteil bedeutend höherer Ausbeute. Die Produkte fallen in hoher Reinheit an und müssen nicht durch aufwendige Reinigungsoperationen von Metallsalzen befreit werden. Die nach dem erfindungsgemäßen Verfahren hergestellten Farbstoffe sind beispielsweise ohne weitere Reinigung für die Verwendung zum Einbau in Polyurethankunststoffe geeignet. Gegenüber den bisher bekannten Herstellverfahren entfällt ferner die Abwasserbelastung durch Eisen- oder Zinksalze. Das neue Verfahren eignet sich daher zur Herstellung der Farbstoffe (I) im technischen Maßstab.

Eine spezielle Ausführungsform des erfindungsgemäßen Verfahrens besteht darin, daß die Farbstoffe (I) ohne Zwischenisolierung der Aldehyde und/oder der Verbindungen der Formel (II) hergestellt werden.

Die Überführung der Verbindungen der Formel (III) in die Aldehyde (IV) nach Vilsmeier erfolgt nach bekannten Verfahren mit einem Formylierungsmittel und beispielsweise Phosphoroxychlorid (vgl. Houben-Weyl, Methoden der organischen Chemie, Band 7/1, Seiten 29-32, 1954).

Die Kondensation der Aldehyde (IV) mit Malonsäuredinitril wird vorzugsweise bei Temperaturen zwischen 40 und 100 °C, besonders bevorzugt im Bereich 50 bis 80 °C, in einem Gemisch aus Wasser und einem organischen Lösungsmittel oder in einem organischen Lösungsmittel durchgeführt. Als solche eignen sich beispielsweise Alkohole wie Methanol, Ethanol, die Propanole und Butanole, $C_2$- bis $C_4$-Glykole, Dimethylformamid und andere. Zur Beschleunigung der Kondensationsreaktion können basische Katalysatoren zugesetzt werden wie beispielsweise Ammoniak, Triethylamin, Pyridin, Piperidin, N-Ethylpiperidin, N-Methyl-morpholin, Alkalicarbonate, Alkaliacetate und Acetate anorganischer oder organischer Stickstoffbasen, wie z. B. Ammoniumacetat oder Piperidinacetat.

Bei der erwähnten speziellen Ausführungsform des Verfahrens, bei dem die Farbstoffe (I) ohne Zwischenisolierung der Aldehyde (IV) und/oder der Verbindungen (II) hergestellt werden, arbeitet man beispielsweise wie folgt:

Nach dem Austragen der Vilsmeier-Mischung auf Wasser wird bei einem pH-Wert von ca. 5,5-6,5 und einer Temperatur von ca. 50 °C eine Phasentrennung durchgeführt und dadurch die Salze und Nebenprodukte der Vilsmeier-Reaktion mit der Wasserphase entfernt. Die organische Phase kann dann

direkt in die weiteren Syntheseschritte eingesetzt werden. Ebenso ist es aber auch möglich, die Aldehyde der Formel (IV) aus der organischen Phase zu isolieren.

In den Formeln (I), (II), (III) und (IV) bezeichnen :

$R_1$, $R_2$ bevorzugt Wasserstoff, $C_1$-$C_4$-Alkyl, insbesondere Methyl und Ethyl, $C_1$-$C_4$-Alkoxy insbesondere Methoxy und Ethoxy und Cl.

R steht bevorzugt für $C_1$-$C_4$-Alkyl und Phenyl, besonders bevorzugt für Methyl ;

X steht bevorzugt für $C_1$-$C_4$-Alkylen, insbesondere $-CH_2-CH_2-$ ; die OH-Gruppe am Alkylenrest steht vorzugsweise in 2-Stellung.

Spezielle Bedeutung besitzt das neue Verfahren zur Herstellung von Verbindungen der Formel

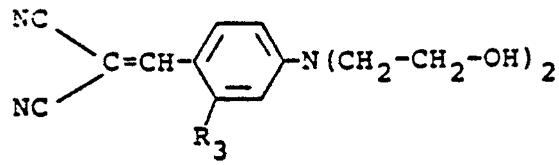

(V)

in der

$R_3$ Wasserstoff oder Methyl bezeichnet.

## Beispiel 1

279 g N,N-Bis-(2-acetoxyethyl)-3-methyl-anilin werden in 250 ml andestilliertem DMF gelöst. Im Laufe von 2 Stunden läßt man bei einer Temperatur von ca. 40 °C 135 ml Phosphoroxychlorid zulaufen. Es wird 6 Stunden lang bei 60 °C gerührt ; danach läßt man erkalten und trägt die Lösung bei 30 °C auf 1 000 ml Ethanol aus. Man gibt 300 ml 25 %ige wäßrige Ammoniaklösung sowie 66 g Malonsäuredinitril zu und kondensiert 5 Stunden lang bei 70 °C. Nach dem Abkühlen auf 10 bis 20 °C wird der entstandene Niederschlag abgesaugt. Man erhält ca. 600 g Feuchtpaste mit einem Trockengehalt von etwa 50 % eines Farbstoffs der Formel

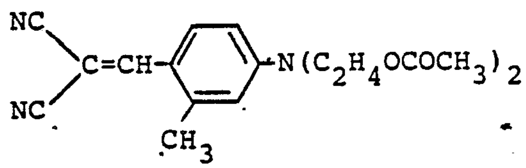

## Beispiel 2

Man trägt 600 g Feuchtpaste (Trockengehalt ca. 50 %) des nach Beispiel 1 erhaltenen Farbstoffes in 800 ml Ethanol ein, erwärmt unter Rühren auf 75 °C und läßt dann so rasch wie möglich 300 ml 37 %ige Salzsäure einlaufen. Es wird 30 Minuten lang unter Rückfluß gekocht. Danach läßt man die Lösung bis auf ca. 60 °C erkalten und trägt unter Rühren auf eine Mischung aus 2 500 g Eis und 1 000 ml Wasser aus. Der erhaltene Niederschlag wird abgesaugt, mit Wasser gewaschen und getrocknet. Man erhält 240 g eines Farbstoffes der Formel

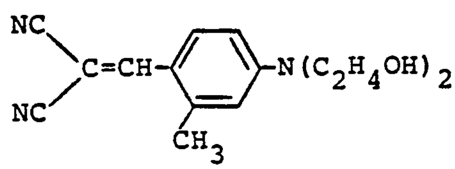

Die Ausbeute berechnet ausgehend von N,N-Bis-(1-acetoxy-ethyl)-3-methyl-anilin beträgt 88 % der Theorie.

## Beispiel 3

Man trägt 600 g 50 %ige Feuchtpaste des nach Beispiel 1 erhaltenen Farbstoffes in 500 ml Methanol ein, erwärmt unter Rühren auf ca. 55 °C und leitet im Laufe von etwa 30 Minuten 75 g HCl-Gas ein. Dabei erwärmt sich die Suspension bis zum Rückfluß des Methanols. Gegen Ende der Reaktion löst sich der Produktfarbstoff. Er wird noch 15 bis 20 Minuten bei einer Temperatur oberhalb 55 °C nachgerührt ; anschließend läßt man die Lösung auf ca. 45-50 °C erkalten und trägt unter Rühren auf eine Mischung aus 2 000 g Eis und 500 ml Wasser aus. Der erhaltene Niederschlag wird abgesaugt, gewaschen und getrocknet. Man erhält 245 g des auch nach Beispiel 2 erhaltenen Farbstoffs. Die Ausbeute beträgt 90 % der Theorie, berechnet ausgehend von der eingesetzten Menge N,N-Bis-(2-acetoxyethyl)-3-methyl-anilin.

Beispiel 4

Man trägt 600 g 50 %ige Feuchtpaste des nach Beispiel 1 erhaltenen Farbstoffes in 500 ml Methanol ein, erwärmt unter Rühren auf ca. 55 °C und leitet im Laufe von etwa 30 Minuten 75 g HCl-Gas ein. Dabei erwärmt sich die Suspension bis zum Rückfluß des Methanols. Man rührt ca. 20 Minuten bei einer Temperatur oberhalb 55 °C nach. Danach legt man schwaches Vakuum an und destilliert bei einer Sumpftemperatur von 60 °C ca. 180 ml eines Gemisches aus Methylacetat und Methanol ab. Man gibt 2 000 ml 60 °C warmes Wasser zu und läßt unter Rühren auf ca. 20 °C erkalten. Der erhaltene Farbstoff wird abgesaugt, mit Wasser gewaschen und getrocknet. Man erhält 255 g des auch nach Beispiel 2 erhaltenen Farbstoffs. Die Ausbeute entspricht 94 % der Theorie.

Beispiel 5

265 g N,N-Bis-(2-acetoxyethyl)-anilin werden analog zu Beispiel 1 in einem Farbstoff der Formel

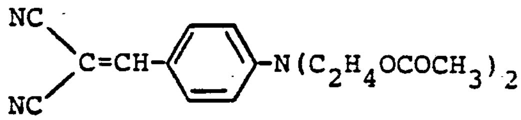

überführt. Dieser wird wie in Beispiel 4 angegeben mit HCl behandelt. Man isoliert 235 g eines Farbstoffs der Formel

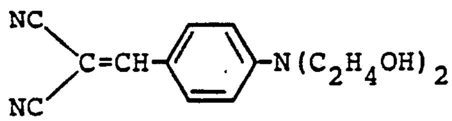

Die Ausbeute entspricht 91,5 % der Theorie.

Beispiel 6

279 g N,N-Bis-(2-acetoxyethyl)-3-methyl-anilin werden in 210 g andestilliertem DMF gelöst. Im Laufe von ca. 3 Stunden läßt man 182 g Phosphoroxychlorid so zulaufen, daß die Temperatur von anfangs ca. 40 °C auf 50-55 °C ansteigt. Um die Temperatur von 50-55 °C nicht zu überschreiten, kühlt man. Anschließend heizt man im Laufe von 1 Stunde auf 70-75 °C auf und hält 6 Stunden lang bei dieser Temperatur. Man kühlt danach auf ca. 50 °C ab und trägt die Reaktionslösung unter Rühren und Kühlen bei 40-45 °C auf 500 g Wasser aus. Durch gleichzeitige Zugabe von ca. 325 g 50 % Natronlauge hält man dabei den pH-Wert zwischen 4,5 und 5,5. Zum Schluß läßt man die Temperatur auf 50 °C steigen und bringt den pH-Wert auf 5,5. Bei 50 °C stellt man den Rührer ab und läßt die Phasen sich trennen. Die trübe, bräunliche, dünnflüssige Unterphase wird von der viskosen, dunklen Oberschicht, die den Aldehyd enthält, abgetrennt. Zur Ölphase gibt man 280 g Methanol und stellt den pH-Wert mit ca. 14 g wasserfreiem Natriumacetat auf 5,0-5,5. Danach werden 68 g Malonsäuredinitril zugegeben. Im Laufe von 1 Stunde heizt man auf 60 °C auf und rührt dann 6 Stunden lang bei 60-65 °C nach. Nach Beendigung der Kondensation kühlt man auf 50-55 °C ab und leitet bei dieser Temperatur unter schwacher Kühlung im Laufe von ca. 1 Stunde 66,5 g Chlorwasserstoff-Gas ein. Danach legt man schwaches Vakuum an und destilliert bei einer Sumpftemperatur von 60-65 °C ca. 150 g eines Gemisches auf Methylacetat und Methanol ab. Danach füllt man mit ca. 60 °C heißem Wasser auf ein Gesamtvolumen von 1 400 ml auf, wobei der Farbstoff als Schmelze dispergiert wird. Durch Außenkühlung wird daraufhin auf ca. 25 °C abgekühlt. Dabei kristallisiert der Farbstoff als Granulat durch. Anschließend stellt man unter Kühlung bei ca. 30 °C durch Zugabe von ca. 145 g 50 %iger Natronlauge den pH-Wert auf 2,5 ; danach kühlt man auf 5 °C ab und saugt den Farbstoff der Formel

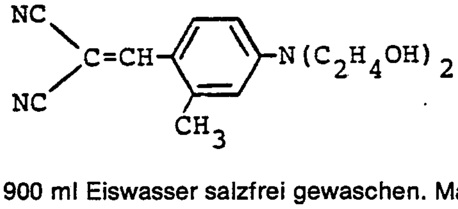

ab. Der Preßkuchen wird mit ca. 900 ml Eiswasser salzfrei gewaschen. Man erhält ca. 300 g Feuchtpaste ; nach Trocknung im Vakuumschrank bei 50 °C erhält man 260 g Reinfarbstoff entsprechend 96 % der Theorie.

**Patentansprüche**

1. Verfahren zur Herstellung von Styrylfarbstoffen der Formel

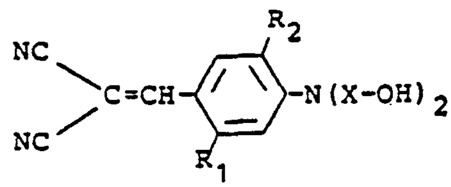

(I)

in der

$R_1$, $R_2$ Wasserstoff, Alkyl, Alkoxy oder Halogen und

X einen Alkylenrest bezeichnen,

dadurch gekennzeichnet, daß man Verbindungen der Formel

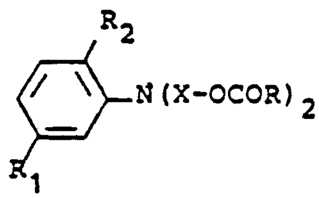

(III)

in der

X, $R_1$, $R_2$ die zu Formel (I) angegebene Bedeutung besitzen und

R Alkyl oder Aryl bezeichnet,

nach der Vilsmeier-Reaktion in Aldehyde der Formel

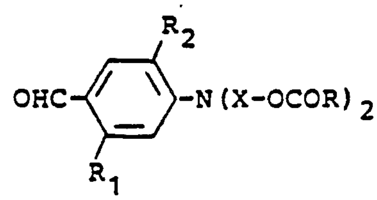

(IV)

in der

X, R, $R_1$, $R_2$ die zu Formel (III) angegebene Bedeutung besitzen,

überführt und die Aldehyde mit Malonsäuredinitril zu Verbindungen der Formel

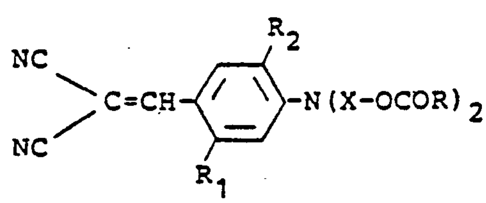

(II)

in der

X, R, $R_1$, $R_2$ die zu Formel (III) angegebene Bedeutung besitzen,

umsetzt, und man diese mit Mineralsäure zu Verbindungen der Formel (I) hydrolysiert und diese isoliert.

2. Verfahren gemäß Anspruch 1, dadurch gekennzeichnet, daß man die Hydrolyse der Verbindungen der Formel (II) bei 55-80 °C in einem Gemisch aus Wasser und einem organischen Lösungsmittel oder in einem organischen Lösungsmittel durchführt.

3. Verfahren gemäß Anspruch 1, dadurch gekennzeichnet, daß die Farbstoffe der Formel (I) ohne Zwischenisolierung der Aldehyde (IV) und/oder der Verbindungen (II) hergestellt werden.

4. Verfahren gemäß den Ansprüchen 1-3 zur Herstellung von Farbstoffen der Formel (I) in der

$R_1$, $R_2$ Wasserstoff, $C_1$-$C_4$-Alkyl, insbesondere Methyl und Ethyl, $C_1$-$C_4$-Alkoxy, insbesondere Methoxy und Ethoxy, und Chlor und

X $C_1$-$C_4$-Alkylen, insbesondere $—CH_2—CH_2—$ bezeichnen, wobei die —OH-Gruppe am Alkylenrest in 2-Stellung steht.

5. Verfahren gemäß den Ansprüchen 1-3 zur Herstellung von Farbstoffen der Formel

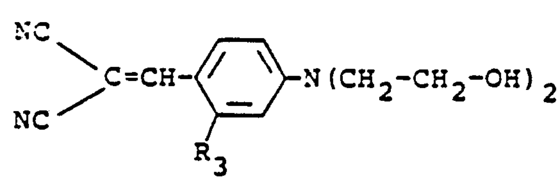

(V)

in der

$R_3$ Wasserstoff oder Methyl bezeichnet.

6. Verfahren gemäß den Ansprüchen 1 bis 5, dadurch gekennzeichnet, daß man Zwischenprodukte der Formeln (II), (III) und (IV) einsetzt, bei denen R $C_1$-$C_4$-Alkyl oder Phenyl bezeichnet.

7. Verfahren gemäß Anspruch 6, dadurch gekennzeichnet, daß R Methyl bezeichnet.

**Claims**

1. Process for the preparation of styryl dyestuffs of the formula

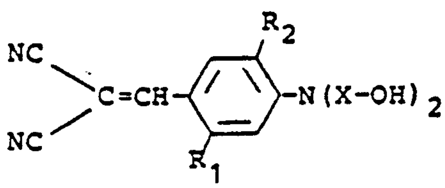

(I)

in which

$R_1$ and $R_2$ denote hydrogen, alkyl, alkoxy or halogen and

X denotes an alkylene radical,

characterised in that compounds of the formula

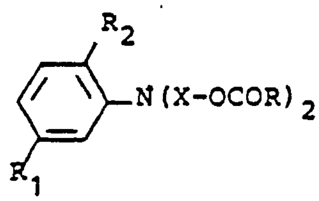

(III)

in which

X, $R_1$ and $R_2$ have the meaning indicated for formula (I) and

R denotes alkyl or aryl,

are converted by the Vilsmeier reaction into aldehydes of the formula

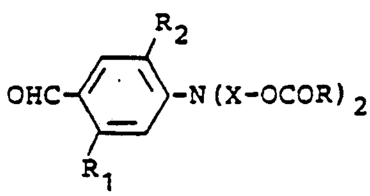

(IV)

in which

X, R, $R_1$ and $R_2$ have the meaning indicated for formula (III)

and the aldehydes are reacted with malonic dinitrile to give compounds of the formula

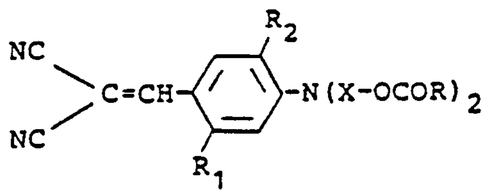

(II)

in which

X, R, $R_1$ and $R_2$ have the meaning indicated for formula (III)

and the latter compounds are hydrolysed by means of mineral acid to give compounds of the formula (I) and the latter are isolated.

2. Process according to Claim 1, characterised in that the hydrolysis of the compounds of the formula (II) is carried out at 55-80 °C in a mixture of water and an organic solvent or in an organic solvent.

3. Process according to Claim 1, characterised in that the dyestuffs of the formula (I) are prepared without intermediate isolation of the aldehydes (IV) and/or of the compounds (II).

4. Process according to Claims 1-3 for the preparation of dyestuffs of the formula (I) in which
$R_1$ and $R_2$ denote hydrogen, $C_1$-$C_4$-alkyl, in particular methyl and ethyl, $C_1$-$C_4$-alkoxy, in particular methoxy and ethoxy, and chlorine and
X denotes $C_1$-$C_4$-alkylene, in particular $-CH_2-CH_2-$, the OH group in the alkylene radical being in the 2-position.

5. Process according to Claims 1-3 for the preparation of dyestuffs of the formula

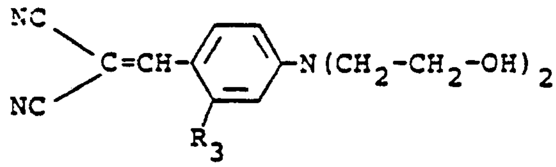
(V)

in which
$R_3$ denotes hydrogen or methyl.

6. Process according to Claims 1 to 5, characterised in that intermediate products of the formulae (II), (III) and (IV) are used in which R denotes $C_1$-$C_4$-alkyl or phenyl.

7. Process according to Claim 6, characterised in that R denotes methyl.

**Revendications**

1. Procédé de production de colorants styryliques de formule

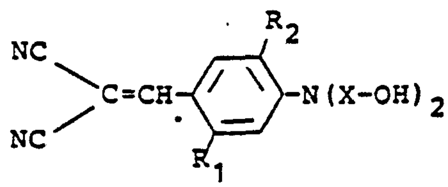
(I)

dans laquelle
$R_1$, $R_2$ représentent l'hydrogène, un groupe alkyle, un groupe alkoxy ou un halogène et
X est un reste alkylène,
caractérisé en ce qu'on transforme des composés de formule

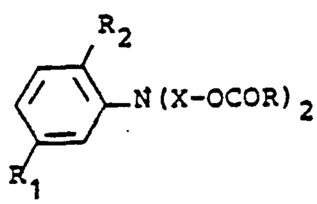
(III)

dans laquelle
X, $R_1$, $R_2$ possèdent la définition indiquée pour la formule (I) et
R désigne un groupe alkyle ou aryle,
d'après la réaction de Vilsmeier en aldéhydes de formule

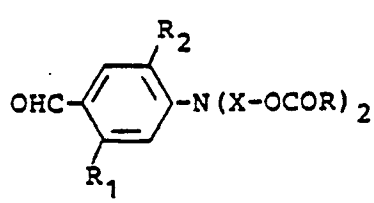
(IV)

dans laquelle
X, R, $R_1$, $R_2$ possèdent la définition indiquée pour la formule (III),
et on fait réagir les aldéhydes avec le dinitrile de l'acide malonique pour former des composés de formule

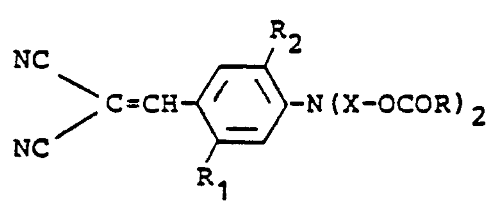
(II)

dans laquelle

X, R, $R_1$, $R_2$ possèdent la définition indiquée pour la formule (III) et on hydrolyse ces composés avec un acide minéral en composés de formule (I) que l'on isole.

2. Procédé suivant la revendication 1, caractérisé en ce qu'on conduit l'hydrolyse des composés de formule (II) à 55-80 °C dans un mélange d'eau et d'un solvant organique ou dans un solvant organique.

3. Procédé suivant la revendication 1, caractérisé en ce qu'on produit les colorants de formule (I) sans isolement intermédiaire des aldéhydes (IV) et/ou des composés (II).

4. Procédé suivant les revendications 1-3 pour la production de colorants de formule (I) dans laquelle

$R_1$, $R_2$ représentent l'hydrogène, un groupe alkyle en $C_1$ à $C_4$, notamment les groupes méthyle et éthyle, un groupe alkoxy en $C_1$ à $C_4$, notamment les groupes méthoxy et éthoxy, et le chlore et

X est un groupe alkylène en $C_1$ à $C_4$, notamment le groupe $-CH_2-CH_2-$, le groupe —OH occupant la position 2 sur le reste alkylène.

5. Procédé suivant les revendications 1-3 pour la production de colorants de formule

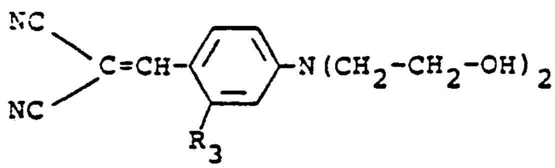

(V)

dans laquelle

$R_3$ désigne l'hydrogène ou le groupe méthyle.

6. Procédé suivant les revendications 1 à 5, caractérisé en ce qu'on utilise des produits intermédiaires de formules (II), (III) et (IV) dans lesquelles R désigne un groupe alkyle en $C_1$-$C_4$ ou phényle.

7. Procédé suivant la revendication 6, caractérisé en ce que R désigne le groupe méthyle.